# EUROPÄISCHE PATENTSCHRIFT

(11) **EP 0 706 005 B1**
(45) Veröffentlichungstag und Bekanntmachung des Hinweises auf die Patenterteilung: **23.02.2000**
(21) Anmeldenummer: 95115031.7
(22) Anmeldetag: 25.09.1995
(51) Int. Cl.: F16L 59/12, F16L 59/02

(54) **Rohrleitungssystem mit Überwachungseinrichtung**
Device to detect and locate a leak in a pipe system
Dispositif de détection et de localisation de fuite pour un système de tuyaux

(30) Priorität: 06.10.1994 DE 4435718
(43) Veröffentlichungstag der Anmeldung: 10.04.1996
(73) Patentinhaber: BAYER AG, 51368 Leverkusen (DE)
(72) Erfinder: Bergmann-Franke, Axel, D-41540 Dormagen (DE); Koldewitz, Wolfgang, D-51375 Leverkusen (DE); Lintermann, Michael, D-51107 Köln (DE); Schmidt, Helmut, D-51519 Odenthal (DE)

(56) Entgegenhaltungen:
- EP-A- 0 093 923
- DE-C- 352 616
- GB-A- 567 729
- GB-A- 791 963
- US-A- 3 146 005

## Beschreibung

Die Förderung von hochtoxischen, aggressiven und/oder explosionsgefährlichen flüssigen oder gasförmigen Medien in Rohrleitungen stellt einerseits besondere Anforderungen an die Leckagefreiheit solcher Rohrleitungen und andererseits an die Überwachung solcher Rohrleitungen zur frühzeitigen Feststellung eventuell auftretender Lecks.

Die in vielen Fällen eingesetzte Sicherheitsmaßnahme der regelmäßigen visuellen Inspektion der Rohrleitung im Rahmen von Rundgängen des Überwachungspersonals, gegebenenfalls unter Mitführung spezieller Gasdetektionsgeräte, verlangt eine freiliegende Rohrleitungsführung, die insbesondere im Bereich von Mauerdurchführungen häufig nicht gegeben ist. Im Falle der Förderung besonders kritischer Medien wird daher gelegentlich die Doppelmanteltechnik (EP-A 93 923 beschreibt die Doppelmanteltechnik auf dem Gebiet der Schallisolierung) eingesetzt, wobei in dem zwischen dem inneren, das Medium fördernden Rohr und dem konzentrischen äußeren Mantel gebildeten Ringkanal das darin befindliche Gas auf Kontamination mit dem im inneren Rohr geförderten Medium geprüft wird. Dabei wird die Rohrleitung aus vorgefertigten Doppelmantel-Leitungselementen montiert, wobei aufwendige Spezialflansche und Spezialkammprofildichtungen erforderlich sind, die selbst zu Abdichtungsschwierigkeiten führen können.

Die Aufgabe der vorliegenden Erfindung besteht nun darin, ein einfach zu montierendes Rohrleitungssystem mit Überwachungseinrichtung zur Verfügung zu stellen, das die Vorteile der bekannten Doppelmanteltechnik aufweist, aber den Einsatz aufwendiger Flanschkonstruktionen vermeidet und im Bedarfsfall ohne Demontage des Rohrsystems einen Zugang zu dem inneren Rohr erlaubt.

Die erfindungsgemäße Aufgabe wird durch die Merkmale des Anspruchs 1 gelöst. Das innere, das flüssige oder das gasförmige Medium fördernde Rohr wird im wesentlichen flanschfrei durch Verschweißen vorgefertigter Rohrleitungselemente ausgebildet und der konzentrische äußere Mantel wird durch Verkleben von Halbschalen aus geschlossenzelligem Schaumkunststoff aufgebaut. Zur Gewährleistung der mechanischen Stabilität und zum Schutz gegen Verletzungen wird das äußere Mantelrohr ferner mit einer metallischen Ummantelung, die z. B. durch Spannbänder fixiert wird, umgeben.

Gegenstand der vorliegenden Erfindung ist demgemäß ein Rohrleitungsabschnitt, enthaltend
a) ein inneres gasdichtes Rohr zur Förderung hochtoxischer, aggressiver und/oder explosionsgefährlicher flüssiger oder gasförmiger Medien,
b) ein koaxiales aus geschlossenzelligem Schaumkunststoff bestehendes, aus Halbschalen durch Verkleben erhaltenes Schutzrohr mit einem Innendurchmesser, der größer ist als der Außendurchmesser des inneren Rohres, so daß um das innere Rohr ein freier Ringkanal gebildet wird,
c) wobei in dem Ringkanal auf im Abstand zueinander liegenden Umfangslinien jeweils beabstandete Distanzblöcke zur Zentrierung der Rohre angeordnet sind, sowie
d) einer äußeren metallischen Ummantelung,
wobei die inneren Rohrleitungsabschnitte flanschfrei verschweißt sind und wobei der zwischen dem inneren und äußeren Rohr gebildete Ringkanal zumindest am Anfang und Ende der Rohrleitung Einleitorgane zur Spülung des Ringkanals mit Gas aufweist.

Bevorzugt wird als Schaumkunststoff für den äußeren Mantel ein Polyurethan-Hartschaum eingesetzt. Das Verkleben der Schaumstoff-Halbschalen erfolgt durch flächigen Auftrag entsprechend geeigneter Kleber auf die die Halbschalenelemente bildenden Längs- und Querschnittflächen eines gedachten, unendlich ausgedehnten Schaumstoffrohres und Aufeinanderdrücken der Klebflächen bis zur Aushärtung des Klebers. Im Falle von Polyurethan-Hartschaum-Halbschalen wird ein Polyurethan-Kleber eingesetzt.

Vorzugsweise bilden die Schaumkunststoff-Halbschalen und die metallische Ummantelung einen Verbund. Dabei können die Verbund-Halbschalen so hergestellt werden, daß ein metallisches Ummantelungsrohr innen mit Schaumstoff beschichtet oder ausgeschäumt wird, in Längsrichtung aufgeschnitten wird, und der Innendurchmesser des Schaumstoffs gegebenenfalls ausgefräst wird. Dabei wird bevorzugt als metallisches Ummantelungsrohr ein Wickelfalzrohr, z.B. aus dünnem Blech von 0,2 bis 1 mm Dicke eingesetzt.

Die Ausbildung des äußeren Mantels als Schaumstoff/Blech-Verbund verleiht dem äußeren Mantel eine besonders hohe mechanische Stabilität, so daß der Mantel ohne weitere Vorkehrungen die durch Rohrhalterungen ausgeübten Kräfte aufnehmen kann.

Während des Verklebens der Verbund-Halbschalen und später zur Gewährleistung einer erhöhten mechanischen Stabilität können die Halbschalen durch Spannbänder zusammengehalten werden.

In gleicher Weise können weitere Mantelelemente eines Rohrleitungssystems, wie Bögen oder Verzweigungen hergestellt werden. Das entsprechende Bogen- bzw. Verzweigungselement eines entsprechenden metallischen Ummantelungsrohres wird ausgeschäumt, in Längsrichtung aufgeschnitten und der Innendurchmesser ausgefräst.

Am Anfang und Ende einer aus erfindungsgemäßen Rohrleitungsabschnitten aufgebauten Rohrleitung werden erfindungsgemäß ferner Einleitorgane zur Spülung des zwischen dem inneren und äußeren Rohr gebildeten Ringkanals mit Gas vorgesehen. Das innere hoch toxische, aggressive, explosionsgefährliche, flüssige oder gasförmige Medien fördernde Rohr kann dann auf Undichtigkeiten überwacht werden, indem an dem einen Ende der Rohrleitung ein Gas (Luft oder Stickstoff) in den Ringkanal eingeleitet wird und am anderen Ende abgezogen wird, wobei das Gas mittels an sich bekannter geeigneter Analysenverfahren auf Kontamination mit dem geförderten Medium analysiert wird. Je nach dem geförderten Medium sind z.B. Statoxmeßköpfe, Infrarotdetektoren, Indikatorpapier, usw. geeignet.

Ein weiterer Vorteil des erfindungsgemäßen Rohrleitungssystems liegt darin, daß das innere, fördernde Rohr im Gegensatz zur herkömmlichen Doppelmanteltechnik auf leichte Weise ohne Demontage zugänglich bleibt, z.B. um Schweißnähte des inneren Rohres zu überprüfen. In diesem Falle kann der äußere Mantel auf einfache Weise entlang den Klebstellen aufgeschnitten werden, so daß das innere Rohr an den Schweißnähten freigelegt wird. Nach der Überprüfung werden die entfernten Mantelelemente auf einfache Weise erneut durch Kleben befestigt.

Im Falle des Auftretens eines Lecks, d. h. im Falle der Detektion der Kontamination des Spülgases des Ringkanals, kann das Leck auf folgende einfache Weise geortet werden: In den Mantel werden sukzessive Bohrungen eingebracht, aus denen entweder Spülgas zur Analyse abgezogen wird oder Spülgas eingeleitet wird. Zum Beispiel kann zunächst in der Mitte der Rohrleitung eine zusätzliche Bohrung eingebracht werden, aus der Spülgas abgezogen wird. Ergibt die Analyse, daß dieses Spülgas nicht kontaminiert ist, befindet sich das Leck zwischen der zusätzlichen Abzugsstelle und dem Ende der Rohrleitung an dem kontaminiertes Gas abgezogen wird. Durch schrittweises Vorgehen kann die Stelle, an der sich das Leck befindet, sukzessive geortet werden. Die zusätzlich angebrachten Bohrungen können anschließend auf einfache Weise durch Einkleben von Schaumstoffpfropfen wieder geschlossen werden. Die metallische Ummantelung der Verschlußstelle kann außen durch eine Blechabdeckung, gegebenenfalls durch Spannband gesichert, verschlossen werden.

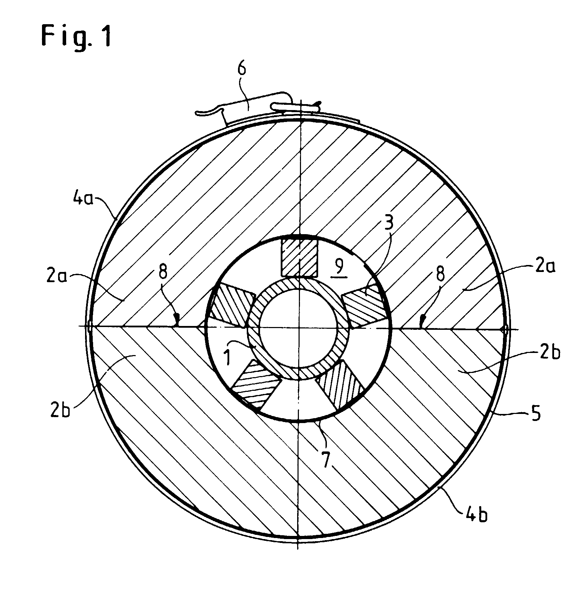

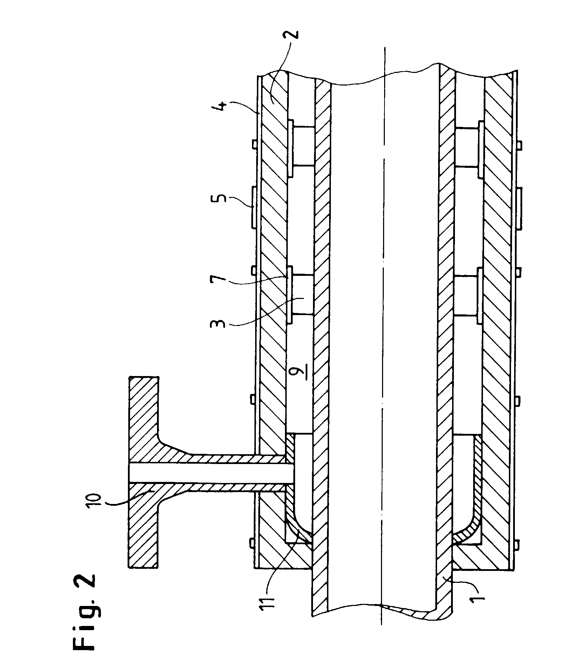

Der Erfindung wird nachfolgend anhand der beigefügten Figuren 1 und 2 näher erläutert:
- Fig. 1: zeigt einen Querschnitt durch einen erfindungsgemäßen Rohrleitungsabschnitt. Das innere fördernde Rohr 1 ist durch einen durch zwei Schaumkunststoff-Halbschalen 2a) und 2b) gebildeten Mantel umgeben, so daß sich ein Ringkanal 9 zwischen innerem Rohr 1 und Mantel 2 gebildet hat. Die Zentrierung erfolgt über Abstandblöcke 3. Die Halbschalen 2a) und 2b) sind entlang der Schnittebene 8 flächig verklebt. Zum Schutz gegen Verletzung und mechanischen Stabilisierung sind Rohrhalbschalen 4a) und 4b), z.B. aus Stahlblech vorgesehen, die durch ein umlaufendes Spannband 5 fixiert werden. Das Spannband 5 wird mittels Spannhebel 6 unter Spannung gehalten.
- Fig. 2: zeigt einen Längsquerschnitt durch das Ende einer erfindungsgemäßen Rohrleitung. Die Ziffern bezeichnen, soweit auch in Fig. 1 vorhanden, jeweils die gleichen Elemente wie in Fig. 1. Zusätzlich dargestellt ist der Prüfstutzen 10, über den Gas in den Ringkanal 9 eingeleitet werden kann oder aus dem Ringkanal 9 abgezogen werden kann. Zur Gewährleistung der mechanischen Stabilität des Prüfstutzens 10 ist auf das innere Rohr 1 ein einseitig offenes koaxiales Rohrstück 11 aufgeschweißt, in das der Prüfstutzen 10 mündet. Der um die Zentrierblöcke 3 herumgelegte Blechstreifen 7 vermeidet, daß die Zentrierblöcke 3 sich in die Schaumstoffschale 2 eindrücken. Ferner können die Zentrierblöcke 3 auf dem Streifen 7, z.B. durch Kleben oder mechanisch fixiert sein, wodurch die Montage vereinfacht wird.

## Patentansprüche

1. Rohrleitung, bestehend aus einer Vielzahl von Rohrleitungsabschnitten, enthaltend
a) ein inneres gasdichtes Rohr zur Förderung hochtoxischer, aggressiver und/oder explosionsgefährlicher flüssiger oder gasförmiger Medien,
b) ein koaxiales aus geschlossenzelligem Schaumkunststoff bestehendes, aus Halbschalen durch Verkleben erhaltenes äußeres Mantelrohr mit einem Innendurchmesser, der größer ist als der Außendurchmesser des inneren Rohres, so daß um das innere Rohr ein freier Ringkanal gebildet wird,
c) wobei in dem Ringkanal auf im Abstand zueinander liegenden Umfangslinien jeweils beabstandete Distanzblöcke zur Zentrierung der Rohre angeordnet sind, sowie
d) eine äußere metallische Ummantelung,
wobei die inneren Rohrleitungsabschnitte flanschfrei verschweißt sind und wobei der zwischen dem inneren und äußeren Rohr gebildete Ringkanal zumindest am Anfang und Ende der Rohrleitung Einleitorgane zur Spülung des Ringkanals mit Gas aufweist.

2. Rohrleitung nach Anspruch 1, wobei die Schaumstoff-Halbschalenabschnitte und die Ummantelungsabschnitte einen Verbund bilden.

3. Rohrleitung nach Anspruch 2, wobei die den Verbund bildenden Halbschalenabschnitte durch Ausschäumen von metallischem Wickelfalzrohr, Halbieren in Längsrichtung und Ausfräsen des Innendurchmessers erhalten wurden.

## Claims

1. Pipeline, composed of a plurality of pipeline sections, comprising
a) an inner gastight pipe for conveying highly toxic, aggressive and/or explosive liquid or gaseous media,
b) a coaxial outer casing pipe made of closed-cell foamed plastics material, obtained by bonding together half shells and having an internal diameter which is larger than the external diameter of the inner pipe so that a free annular duct is formed around the inner pipe,
c) wherein in the annular duct spacer blocks for centring the pipes are disposed spaced apart from one another along peripheral lines lying at a distance from one another, as well as
d) an outer metal jacket,
wherein the inner pipeline sections are welded together in a flange-free manner and wherein the annular duct formed between the inner and outer pipe comprises, at least at the beginning and end of the pipeline, introducing members for sweeping the annular duct with gas.

2. Pipeline according to claim 1, wherein the foamed material half-shell sections and the jacket sections form a composite.

3. Pipeline according to claim 2, wherein the half-shell sections forming the composite were obtained by foaming out metal folded spiral-seam pipe, halving in longitudinal direction and milling out the internal diameter.

## Revendications

1. Canalisation constituée de nombreux tronçons de canalisation contenant
a) un tuyau interne étanche au gaz pour le transport de milieux liquides ou gazeux hautement toxiques, agressifs et/ou explosibles
b) un tuyau d'enveloppe coaxial externe obtenu en collant des demi-coques constituées d'une mousse à alvéoles fermées présentant un diamètre interne qui est supérieur au diamètre externe du tuyau interne de telle sorte qu'il est formé autour du tuyau interne un canal annulaire libre,
c) des blocs d'espacement à chaque fois espacés étant disposés pour le centrage des tuyaux dans le canal annulaire sur des lignes circonférentielles espacées les unes des autres, ainsi que
d) une gaine métallique externe,
les tronçons de canalisations internes étant soudés sans bride et le canal annulaire formé entre le tuyau interne et le tuyau externe présentant au moins au début et à la fin de la canalisation un organe d'introduction pour le rincage du canal annulaire avec du gaz.

2. Canalisation selon la revendication 1, les tronçons de demi-coques en mousse et les tronçons de gaine formant un composite.

3. Canalisation selon la revendication 2, les tronçons de demi-coques formant le composite ayant été obtenus en appliquant une mousse sur un tuyau métallique agrafé en le divisant en deux dans la direction longitudinale et en fraisant le diamètre interne.
